**Europäisches Patentamt**

**European Patent Office**

**Office européen des brevets**

(19)

(11) Publication number: **0 133 835**

**A2**

(12) **EUROPEAN PATENT APPLICATION**

(21) Application number: **84401645.1**

(22) Date of filing: **08.08.84**

(51) Int. Cl.⁴: **H 04 N 9/04**

(30) Priority: **11.08.83 US 522343**

(43) Date of publication of application:
**06.03.85 Bulletin 85/10**

(84) Designated Contracting States:
**DE FR GB IT NL**

(71) Applicant: **FAIRCHILD CAMERA & INSTRUMENT CORPORATION**
**464 Ellis Street**
**Mountain View California 94042(US)**

(72) Inventor: **Dyck, Rudolph H.**
**160 Ely Place**
**Palo Alto California 94306(US)**

(74) Representative: **Chareyron, Lucien et al,**
**Schlumberger Limited Service Brevets c/o Giers 12, place des Etats Unis B.P. 121**
**F-92124 Montrouge Cédex(FR)**

(54) **CCD area image sensor and method for color imaging.**

(57) A solid state area image sensor for producing color video information comprises an array of like-shaped, color-responsive photoelements arranged in successive horizontal rows such that, except at the edges of the array, any one photoelement having one color response is surrounded by six adjacent photoelements all having color responses differing from the one surrounded photoelement, in an approximately hexagonal array. Color video information is produced in response to combined signals from three mutually adjacent photoelements by processing the photoelement output signals two rows at a time and producing color video information in response to signals from three mutually adjacent photoelements of three different color responses in adjacent rows. The three different color responses are white (w), yellow (Ye), and cyan (Cy), and luminance (L) and chrominance (RGB) information is produced in accordance with the equations:

$$L = Cy + Ye + 0.66aW ;$$
$$R = W - Cy ;$$
$$G = Cy + Ye - W ;$$
$$B = W - Ye ;$$

where L is luminance, R is red, G is green, B is blue and a is an adjustable quantity near unity.

FIG.4

50.4269

# CCD AREA IMAGE SENSOR AND METHOD FOR COLOR IMAGING

## BACKGROUND OF THE INVENTION

The present invention relates to color imaging devices and, in particular, to a solid state area image sensor and method for color imaging.

Solid state area image sensors are used increasingly in industrial and communications technology to produce video signals representing an image of a scene. The typical solid state area image sensor comprises an array of photoelements arranged in rows and columns and accessable through charge transfer techniques which transport the charges produced by the photoelements to an output device. One such solid state sensor using charge coupled device (CCD) technology, the Fairchild CCD 222 area image sensor, has 488 rows and 380 columns and provides 488 lines of video with 380 samples per line for each video frame. Other solid state area image sensors using metal-oxide-semiconductor (MOS) technology are also commercially available.

Although the Fairchild CCD 222 has 488 rows and 380 columns of photoelements, the shape and spacing of the photoelements is such that the sensor area is slightly rectangular in shape with the horizontal length of the sensor being slightly greater than its vertical height. More specifically, the center-

-1-

to-center spacing of each CCD 222 pixel (the area of a scene imaged by one photoelement) is about 30 μm horizontally and 18 μm vertically. Thus, the aspect ratio of each photoelement, the ratio of the height or vertical dimension to the length or horizontal dimension, is about 3:5. Similar rectangular aspect ratios are typically maintained in MOS area image sensors.

Solid state area image sensors are used both for black and white (monochrome) and color imaging. Monochrome imaging is fairly straightforward since the video information need only reflect intensity values at the sample points of the scene. However, color imaging involves producing at least three distinct types of video information related to certain basic colors.

The obvious way to produce tri-color information is to produce three images of the scene and focus the images on three different sensor arrays through three different color filters as shown in U.S. Patent 3,975,760. However, a more desirable way to obtain color video information is to do so on a single area image sensor array since the use of color filters and a different sensor array for each color significantly increases cost and complexity. Accordingly, most recent efforts to produce solid state color area image sensors have been directed at this objective. Typical approaches to using a single sensor array for color imaging are shown in U.S. Patent Nos. 3.971 065 to Bayer; 3,982,274 to Chai; 4,001,878 to Weimer; 4,016,597 to Dillon et al.; 4,042,956 to Yamanaka; 4,047,203 to Dillon; 4,153,912 to Gold; 4,245,241 and 4,246,601 both to Sato et al; 4,281,338 to Takahashi et al.; and 4,293,871 to Macovski.

The above patents all use various configurations of color-responsive or color sensitive photoelements to produce color related video signals from which a color image can be reconstructed. The photoelements are made color responsive through overlying filters or other known fabrication techniques so that each photoelement produces a video signal sample (charge packet) related in intensity (charge level) to the intensity of illumination of a particular color of light incident on that element.

While common techniques are used to obtain color-responsive photoelements, the specific color patterns and the approaches to producing a color video signal from these patterns varies widely. One approach illustrated in the Bayer patent 3,971,065 uses a filter mosaic overlying a solid state area image sensor to produce an array of rows and columns of color-responsive photoelements with every other array position occupied by a green-sensitive element serving to detect luminance. Red-sensitive "chrominance" elements alternate with the luminance detecting elements in every other row while blue-sensitive chrominance elements alternate with the luminance elements in the remaining, alternate rows. The luminance and chrominance signals from pairs of the rows thus provide red, blue and green color information with green predominating.

In Dillon patent 4,047,203, every other position of an array of horizontal rows and vertical columns of color-responsive photoelements is again occupied by a green-sensitive, luminance element. However, the chrominance elements of each row alternate between red and blue along the row so that a pattern of four successive elements, two of which are luminance elements and two of which are different chrominance elements, repeats along the length of each row with one full element of horizontal displacement from row to row. Presumably, the output signals from successive lines of the array are processed as described in the Bayer patent to produce red, blue and green color signals, with green predominating.

In Takahaski patent 4,281,338 and the two Sato et al. patents 4,245,241 and 4,246,601, all owned by Hitachi, Ltd., the rows of photoelements representing horizontal lines of video are read out and processed two at a time. The signals from four mutually adjacent photoelements, two in each line, are used to create the red, blue and green color information necessary to reproduce the image of the scene in color. These patents disclose photoelements of various color sensitivies in various combinations. The Macovski patent 4,293,871 also reads out and processes two lines of video at a time but the patterns of color-responsive photoelements are again different.

In a more efficient design of an array of color-sensitive photoelements, the elements would be located such that only three are necessary to produce the tri-color information needed to reproduce color images. Moreover, the elements would be shaped and located much as the color dots in some color cathode ray tube (CRT) display devices such that the centers of three different color-sensitive elements are located approximately at the corners of an equilateral triangle.

It will be appreciated that the above-mentioned prior art attempts to approach that efficient design have failed in a number of ways. First, many of the prior art approaches use four photoelements to produce the three necessary color information signals. Those that use three elements with their centers located at the corners of a right triangle do not produce signals truely representative of the color content of a portion of the image equally incident on all three elements. Moreover, the color-responsiveness of each element in each group of elements used to create color information is typically such that the signal processing is complicated and/or leads to a much less than optimum result.

## OBJECTS AND BRIEF SUMMARY OF THE INVENTION

It is accordingly an object of the present invention to provide a novel solid state area image sensor and method for producing color image information wherein the information is produced by combining the signals from three mutually adjacent photoelements of the sensor array.

It is another object of the present invention to provide a novel color imaging device with an array of photoelements arranged such that the centers of any three mutually adjacent elements are substantially equidistant and such that the color-responses of any three mutually adjacent elements are all different.

It is yet another object of the present invention to provide a novel color imaging device and method for producing color video information representing horizontal lines of a color image of a scene wherein the color information for each horizontal line of video information is produced from groups of photoelement output signals processed three at a time, with alternate groups of photoelements including two photoelements from one horizontal row and one photoelement from an adjacent horizontal row and with the groups of photoelements intermediate the alternate groups including one photoelement from the one horizontal row and two photoelements from the adjacent horizontal row.

It is a further object of the present invention to provide a novel color imaging device and method for producing color video information of a prescribed resolution using a single array of photoelements with a minimum number of photoelements.

It is yet a further object of the present invention to provide a novel color imaging device and method for producing color video information using a single array of photoelements wherein the photoelements are arranged in a staggered relationship and their signals are processed two horizontal rows at a time, and wherein a luminance signal for a line of video is generated by combining signals from successive groups of three mutually adjacent photoelements, two in one horizontal row and one in an adjacent horizontal row and vice-versa.

It is still a further object of the present invention to provide a novel area color image sensor having photoelements of three types of color response arranged in rows and staggered columns such that each photoelement is surrounded by six mutually adjacent photoelements all having color responses different from the surrounded photoelement.

A solid state area image sensor according to the present invention includes a plurality of like-shaped, color responsive photoelements arranged in a staggered array (i.e., in horizontal rows and staggered vertical columns or vertical columns and staggered horizontal rows). So that any three mutually adjacent photoelements are of different color response and their centers are at the corners of an approximately equilateral triangle. Moreover, any one photoelement having one color response is surrounded by six adjacent photoelements all having color responses differing from the one photoelement they surround, except at the very edge of the sensor array. The photoelements thus are formed in approximately hexagonal arrays over the surface of the sensor.

The photoelement output signals are processed two rows at a time with luminance and chrominance signals being produced from the signals of three mutually adjacent photoelements, one from a first row and two from a second row and vice versa, in each horizontal scan. Each line of video thus includes composite signals from successive triads of photoelements of different color responses across each pair of rows of the sensor. Each photoelement contributes to more than one composite signal, i.e., each photoelement is used in more than one triad, as the video signal is produced.

<u>BRIEF DESCRIPTION OF THE DRAWINGS</u>

These and other objects and advantages of the present invention will be appreciated by one skilled in the art to which the invention pertains from the following detailed description when read in conjunction with the appended drawings in which:

Figure 1 is a functional diagram illustrating the surface of a prior art solid state area image sensor for color imaging;

Figure 2 is a functional diagram illustrating the surface of another prior art solid state area image sensor for color imaging;

Figure 3 is a functional diagram illustrating the surface of still another prior art solid state area image sensor for color imaging;

Figure 4 is a functional diagram illustrating the surface of a solid state area image sensor for color imaging in accordance with the present invention;

Figure 5 is a functional diagram of a portion of the solid state area image sensor of Figure 4 showing one hexagonal group of photoelements;

Figure 6 is a detail view of individual photoelements of a known solid state area image sensor;

Figure 7 is one example of a solid state area image sensor structured in accordance with the present invention using CCD techniques;

Figure 8A and 8B illustrate one example of a solid state area image sensor structured in accordance with the present invention using MOS techniques; and

Figure 9 is a functional diagram illustrating how the photoelements of the solid state area image sensor of Figure 4 are used to produce color video signals.

## DETAILED DESCRIPTION

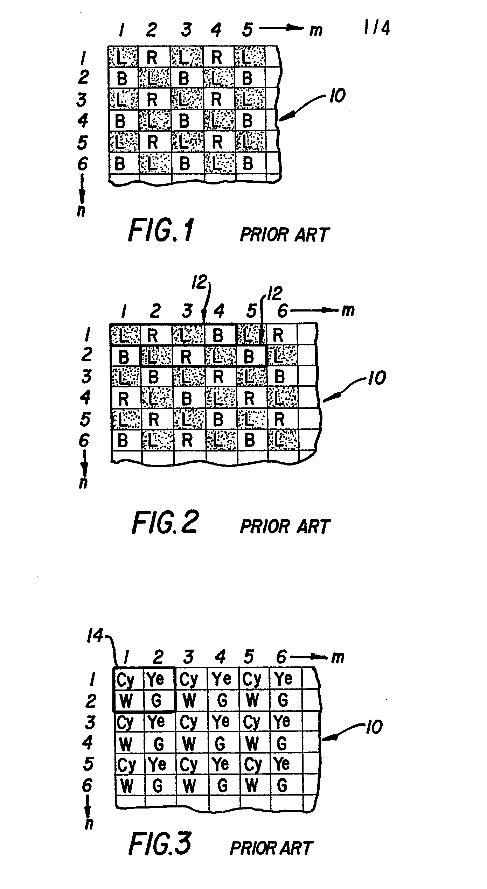

Figures 1 − 3 generally illustrate prior art, solid state area image sensor systems for color imaging. Each of these Figures illustrates part of an area sensor 10 made up of horizontal rows 1 through n and vertical columns 1 through m of color-responsive photoelements. Typically the photoelements are individual, separated photosites created in a silicon substrate. The photosites receive image photons through a transparent photo gate (not shown) and charge accumulates in each photosite as a linear function of the incident illumination (image) intensity and the integration period (i.e. period of charge accumulation controlled by the photo gate).

Although not illustrated in Figures 1 - 3, in a CCD area image sensor each vertical column of photoelements has associated with it a vertical transport shift register comprising a plurality of serially connected shift register stages. The vertical transport register is clocked so as to deliver sequences of photoelement output signals, typically referred to as charge packets, to one or more horizontal transport shift registers also comprising serially connected CCD shift register stages. Thus, horizontal lines of video information corresponding to charge packets from rows of photoelements are read out of the image sensor 10 in a controlled manner.

Alternatively, the photoelements may be individually accessed through MOS techniques with intersecting horizontal and vertical sense lines selectively controlling the readout of each photoelement.

The photoelements are made color-responsive or color sensitive by well known techniques. For example, a filter "mosaic" may be placed over the photoelements so that the light incident on the individual photoelements is filtered and only light of a desired color, i.e. within the desired frequency range, is passed. Alternatively, the photosites may be made frequency sensitive so they respond differently to different wavelengths and thus different colors of light.

The production of color video signals with CCD area image sensors has involved trade-offs among such factors as cost, complexity and signal quality, namely the accuracy of the video signal in reflecting the color content of the image.

Ideally, for reproduction of color images on cathode ray tube (CRT) color "picture" tubes of the type used in television sets, the video signal content must include accurate luminance and chrominance information. The luminance information is essentially that part of a color TV video signal providing brightness information to the TV video circuits. The chrominance information conveys the color balance information of the image.

Various approaches to obtaining acceptable color video signals from solid state area image sensors are presented generally in Figures 1 - 3. Figure 1 illustrates an approach described in greater detail in U.S. Patent 3,971 065 to Bayer. The photoelements are arranged in horizontal rows and vertical columns such that every other photoelement is sensitive to image luminance (L). In this regard, all of the odd numbered photoelements in the odd numbered rows (1-1, 1-3, 1-5, 3-1, 3-3, 3-5, 5-1, 5-3, etc.) are responsive to luminance as are all the even numbered photoelements in the even numbered rows (2-2, 2-4, 4-2, 4-4, etc.). Photoelements between the luminance-responsive elements are responsive to certain colors (i.e. red R and blue B), providing a means for generating chrominance. It will be appreciated that with such an arrangement, the shaded luminance-responsive photoelements form a "checkerboard" pattern and are predominant in the overall sensor array.

In the Bayer system, individual rows of photoelements are read out on a line-by-line basis and the luminance and chrominance information is extracted from each line to produce a video signal. In order to obtain a full line of video information, the chrominance information from two lines must be used since only one type of chrominance information is available in each line.

The approach disclosed in U.S. Patent 4,047,203 to Dillon is similar to the Bayer approach in that luminance responsive elements (L) predominate the area of the sensor array in a checkerboard pattern. However, Dillon arranges the chrominance-related elements in a line with the luminance-related elements to form tetrads 12 of photoelements including two luminance-related elements and two chrominance-related elements of different color types, red R and blue B. Thus, successive groups of four elements along any line each provide luminance and chrominance information.

U.S. Patent 4,246,601 and others owned by Hitachi, Ltd. take yet a slightly different approach to producing a color video signal with a solid state area image sensor. The sensor array, like the others discussed above, is comprised of horizontal rows and vertical columns of color-sensitive photoelements with appropriate means for read-out. The Hitachi patented imaging devices use four photoelement output signals from two rows at a time, however, to resolve the luminance and chrominance problem. Moreover, transmitting filters such as yellow (Ye), cyan (Cy), green (G) and white or panchromatic (W) are used to produce color-sensitivity.

The surface of the Hitachi sensor is arranged with groups 14 of four mutually adjacent photoelements each having a different color response or sensitivity. The groups repeat every row and every column of the sensor as can be seen in Figure 3, although with each shift from row-to-row or column-to-column the order of color-responsiveness of the elements changes in a predictable way.

Using simultaneous two line readout and four elements to resolve chrominance and luminance values achieves the desired horizontal resolution, but four elements are used to produce the chrominance and luminance values whereas only three are needed in principle.

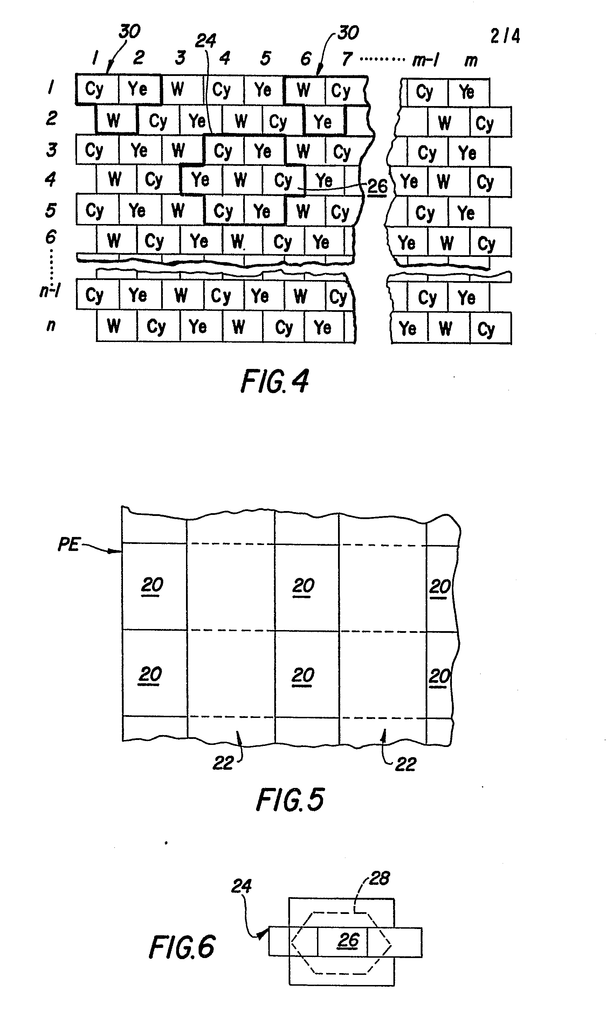

In accordance with a preferred embodiment of the present invention illustrated in Figure 4, the photoelements of the solid state area image sensor are arranged in horizontal rows and vertical columns but the photoelements in every other horizontal row are offset by one-half a column width thereby producing a "staggered column" arrangement. The resulting configuration is one in which every photoelement is surrounded by six other photoelements each adjacent to the central element such that the one central element and the six surrounding elements form a nearly hexagonal array. Each of the surrounding elements differs in color sensitivity from the central element. This pattern repeats over the entire surface of the image sensor except, of course, at the edges.

The rows of photoelements are read out two at a time (i.e., in pairs), and the signals from three mutually adjacent elements, two in one line and one in the other, are used to generate the luminance and chrominance signals. The color-sensitivities of any three mutually adjacent photoelements are different and this tri-color pattern is repeated over the entire surface of the image sensor.

Referring now to Figure 4, m x n photoelements are arranged in horizontal rows and vertical columns with the photoelements in every other row being in columns staggered at least a fraction of an element (e.g. one-half an element) with respect to the elements in the adjacent rows. As will be seen hereinafter, the photoelements present a substantially hexagonal array structure with the centers of any three mutually adjacent photoelements in any two adjacent rows lying at the corners of a triangle that is approximately equilateral.

Each photoelement is color responsive by reason of an overlying filter element or other suitable means. A sequence of three different color responses repeats across each entire row, with photoelements of the same color response in the same row having two photoelements of different color responses between them and photoelements of the same color response in adjacent rows being horizontally displaced from each other by the horizontal dimension of one full photoelement and at least a fraction of another. In other words, photoelements of like color-responsiveness are arranged so that they are not mutually adjacent in the sense that the areas defined by these photoelements of like color-responsiveness are separated from each other by at least some fraction of a photoelement of a different color-responsiveness.

In the embodiment illustrated in Figure 4, the repeating pattern of three different color-responsive photoelements is cyan (Cy), yellow (Ye) and white (W). This means that the Cy photoelements are responsive to cyan light and produce a signal related to the sum of the intensities of incident light of the blue light wavelength and the green light wavelength, and the Ye photoelements are responsive to yellow light and produce a signal related to the sum of the intensities of incident light of the green light wavelength and the red light wavelength. The W photoelements are responsive to the broad spectrum of white light (e.g. as transmitted by a clear filter element).

With continued reference to Figure 4, the hexagonal array structure of the area image sensor of the present invention can be seen by reference to the group of seven photoelements generally indicated at 24. It can be seen that the white-responsive photoelement 26 has six mutually adjacent photoelements surrounding it. Each of the photoelements mutually adjacent to the white-responsive element 26 has a color response different from the central, white-responsive element. Moveover, the six surrounding elements are arranged so that no two photoelements of the same color sensitivity are mutually adjacent.

The array of photoelements generally indicated at 24 is referred to as substantially hexagonal because lines drawn from center-to-center of the six mutually adjacent surrounding photoelements form a hexagonal like shape (see Figure 5). It will be appreciated, however, that the group of seven photoelements 24 in Figure 4 do not form an exac  regular hexagon since the photoelements in the illustrated embodiment are not square. As is shown in Figure 5, for example, the hexagonal shape 28 formed by the array may have two horizontal sides (top and bottom) slightly longer than the remaining four sides. The array is however, substantially hexagonal as set forth above.

Further, with reference to Figure 4, it will be appreciated that there are no two mutually adjacent photoelements of the same color response. The repeating sequence of three different color-responsive photoelement on each line is repeated in each successive line, but this sequence is shifted at least one and one-half elements. Accordingly, any three mutually adjacent elements in two successive lines are all different and together can provide any desired combination of three different color characteristics of the image as is indicated at 30.

Each photoelement is illustrated as a rectangular area with its horizontal length greater than its vertical height. It will be appreciated by one skilled in the art that this is a typical shape of an overall area imaged by a photoelement in conventional solid state area image sensors, but the active portion of the photoelement, i.e. the photosite, may be less than this overall area, particularly if CCD techniques are used.

As is illustrated in Figure 6, for example, in a CCD area image sensor each photoelement includes a photosite 20 and an associated CCD storage element in a vertical column of such elements which are arranged to form a vertical transport shift registers 22. Each photosite and associated CCD storage element (one of which is shaded and designated PE in Figure 5) forms a rectangular photoelement shown in Figure 4. In a typical CCD area image sensor such as the Fairchild CCD 222, the photosite 20 is about 12μm wide by 18μm high. The vertical transport shift registers 22 are covered with an opaque aluminum "shield" which is about 18μm wide. Thus, each photoelement PE is about 18μm high by 30μm long and each has an aspect ration of 3:5.

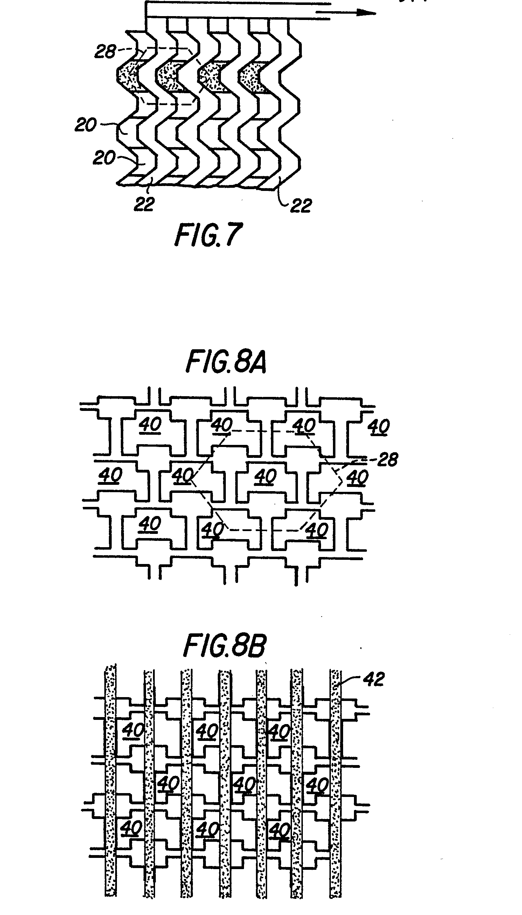

Accordingly, to produce an area image sensor in accordance with the present invention using CCD technology, it may be necessary to produce a rather complex configuration to closely approximate the hexagonal array structure. Thus, for example, as is illustrated in Figure 7, the CCD vertical transport registers 22 may be serpentine in shape so as to accommodate offsets between photosites 20 in adjacent rows and produce the staggered column arrangement previously described. It will be appreciated that the approximately hexagonal array structure described in connection with Figures 4 and 5 can be provided in this manner as indicated at 28. Other arrangements are also possible in which, for example, the vertical transport shift registers are disposed at an angle across the surface of the image sensor or the photoelements are otherwise displaced horizontally from row to row to provide the staggered column structure. Alternatively, a hexagonal array approximation may be achieved in a CCD sensor by using a staggered row approach in which the photoelements in every other column are in rows staggered at least a fraction of an element with respect to elements in adjacent columns.

Of course, MOS technology more readily facilitates the structural arrangement of Figure 4 because the vertical sense lines, which are the only required opaque elements on the surface of the sensor, are relatively narrow. Referring to Figure 8A, for example, an MOS area image sensor approximating the hexagonal array structure comprises a plurality of photoelements 40. Each photoelement is individually addressable by means of transparent horizontal row address gates and opaque vertical sense lines (not shown in Figure 8A). As can be seen in Figure 8B, the vertical sense lines 42 pass over the photoelements and define staggered columns of photoelements as previously discussed in connection with Figure 4. These vertical sense lines are opaque but may be very narrow since, unlike the CCD vertical transport register, they need only be conductors. Accordingly, very little area of each photoelement is lost, i.e., the dead zones are quite small in relation to the area of the photoelement.

Other arrangements such as staggered rows may be used in MOS structures to provide the hexagonal array structure 28 desired. In addition, it should be noted that the MOS approach to producing area image sensors is conventional so further detail will not be provided herein.

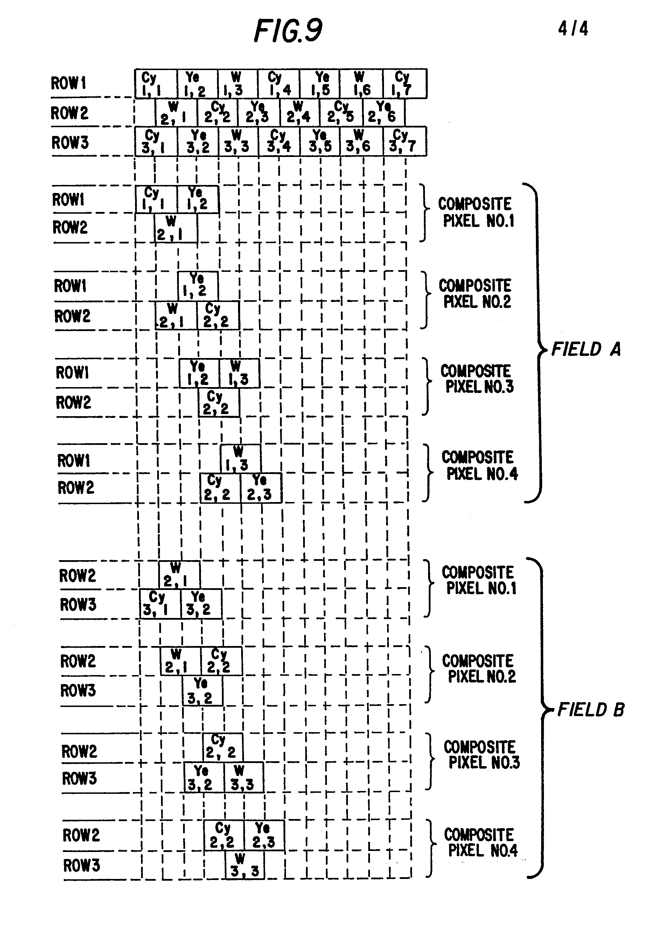

The significance of the structures illustrated in Figures 4, 5, 7 and 8 will be more fully appreciated in connection with Figure 9 wherein portions of three lines or rows of photoelements are illustrated. The first row contains photoelements 1,1 (row 1, column 1) through 1,m; the second row contains photoelements 2,1 through 2,m and so forth. The photoelement signals are processed two rows at a time in groups of three mutually adjacent elements, one element from one line or row and two from an adjacent line.

In the illustrated embodiment, the area image sensor is read field-by-field with two successive fields comprising a frame of video. It will be appreciated that full frame readout may be used, where appropriate, through the provision of special techniques such as those described and claimed in the application for United States Letters Patent of Tom Chan entitled "Charge-Coupled Device Image Sensor And Method For Asynchronous Readout", filed June 21, 1983 and assigned to the assignee of the present invention.

The first group of three mutually adjacent photoelements (1,1), (1,2) and (2,1) in the first and second rows forms the first composite pixel (picture element) of the first field, Field A. The first composite pixel includes two elements from the first row and one element from the second row. The next composite pixel of Field A is formed from the next different group of three mutually adjacent photoelements (1,2), (2,1) and (2,2). This second group includes one photoelement from the first row and two elements from the second row. Only one of the three photoelements forming the second composite pixel is different from the three that form the first composite pixel, so each of the photoelements contributes to a plurality of the composite pixels in each line of the ultimate video signal. In fact, with the exception of the photoelements in the first and last columns, each photoelement contributes to three successive composite pixels.

Field A is produced by processing the signals from composite pixels formed by three mutually adjacent photoelements in the pairs of rows 1 and 2, 3 and 4, 5 and 6 and so forth (i.e., the odd plus lower even row pair) as described above. Field B is produced in this very same manner using composite pixels formed by three mutually adjacent photoelements in the pairs of rows 2 and 3, 4 and 5, 6 and 7, and so forth (the even plus lower odd row pair) as described above. As can be seen in Figure 7, the first composite pixel of Field B is formed by mutually adjacent elements (2,1), (3,1) and (3,2) while the next composite pixel includes elements (2,1) (2,2) and (3,2).

The signals from the three photoelements forming each composite pixel are processed to produce luminance and chrominance information as follows:

$$L = Cy + Ye + 0.66aW \quad ;$$
$$R = W - Cy \quad ;$$
$$G = Cy + Ye - W \quad ;$$
$$B = W - Ye \quad ;$$

where L is luminance, R is red, G is green, B is blue and a is an adjustable quantity near unity.

Every composite pixel provides cyan (Cy), yellow (Ye) and white (W) picture information so both luminance (L) and chrominance (RGB) information is available from every composite pixel. It will be appreciated that the number of composite pixels per line is actually greater than the number of photoelements per line. For example, it can be seen in Figure 7 that the centers of consecutive composite pixels are spaced along a horizontal line only one-half of a photoelement apart. Thus, the horizontal luminance resolution is almost doubled by the present techniques.

Moreover, it will be appreciated that when using an MOS approach as in Figure 8, there is no need to pair the vertical sense lines as is required in the known Hitachi MOS devices. Thus, using known MOS techniques to construct the hexagonal array structure of Figure 4 and 5 (e.g., as shown in Figure 8B) reduces the opaque metal space required for the vertical sense lines and eliminates the minimum geometry metal space required for CCD vertical transport registers. Thus, the fabrication is simplified.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Moreover, variations and changes may be made by those skilled in the art without departing from the spirit of the present invention.

WHAT IS CLAIMED IS

0133835

1.  An area image sensor characterized by:

an array of like-shaped color responsive photoelements, arranged in horizontal or vertical rows such that except at the edges of said array, any one photoelement having one color response is surrounded by six mutually adjacent photoelements all having a color response differing from the color response of said any one photoelement.

2.  The area image sensor of Claim 1 further characterized by means for producing color video information in response to combined signals from a plurality of said photoelements.

3.  The area image sensor of Claim 2 wherein said producing means is characterized by means for scanning the rows of photoelements two rows at a time, and means for producing said color video information in response to signals from three mutually adjacent photoelements

4.  The area image sensor of Claim 2 or 3 characterized in that said array of photoelements includes photoelements of three different color responses.

5.  The area image sensor of Claim 4 characterized in that said three different color responses are white, yellow and cyan.

6.  The area image sensor of Claim 2, 3, 4 or 5 wherein said producing means is characterized by means for scanning the rows of photoelements two rows at a time, and means for producing said color video information in response to signals from three mutually adjacent photoelements.

7. The area image sensor of Claim 1-6 characterized in that the color responses of said three mutually adjacent photoelements are white (W), yellow (Ye), and cyan (Cy) and wherein luminance (L), red (R), green (G) and blue (B) video signals are calculated as follows:

$L = Cy + Ye + 0.66aW$ where a is adjustable and near unity;

$R = W - Cy;$

$G = Cy + Ye - W;$

$B = W - Ye.$

8. The area imaging device of Claim 1-7, characterized by further comprising shift register means for storing signals generated by said photoelements and for supplying as output signals the stored photoelement signals for each of said plurality of rows.

9. The color imaging device of Claim 8 characterized by means for simultaneously processing said stored photoelement signals in two adjacent rows at a time.

10. The color imaging device of Claim 1-9 characterized in that the center of two of any three mutually adjacent photoelements are approximately equidistant from the third.

11. The color imaging device of Claim 1-9 characterized in that each photoelement is rectangular in shape with the ratio of vertical height to the horizontal length being about 3:5, and wherein the centers of two of any three mutually adjacent photoelements are equidistant from the third.

0133835

12. The color imaging device of Claim 1-9 characterized in that each photoelement is rectangular in shape with the ratio of vertical height to horizontal length being about 3:5, and wherein the centers of two of said any three mutually adjacent photoelements are equidistant from the third at an angle less than $90^{\circ}$ to the horizontal and the distance between the centers of said two mutually adjacent photoelements is greater than the distance to the center of said third.

13. The color imaging device of Claim 1-13 characterized in that any three mutually adjacent photoelements in two adjacent rows of the photoelements are positioned to most nearly form an equilateral triangle between their centers as is possible given the shapes of the photoelements.

14. A method for producing color video information from an array of color-response photoelements characterized by comprising the steps of:

arranging said array of photoelements in horizontal or vertical rows such that the photoelements in alternative rows are displaced by a fraction of the dimension of a photoelement in the direction of said rows;

generating luminance and chrominance information from a first set of three mutually adjacent color-responsive photoelements of different color response characteristics located in two successive rows with one of the three photoelements being in one of the two successive rows and the other two photoelements being in the other of the two successive rows; and

generating luminance and chrominance information from a second set of three mutually adjacent color-responsive photoelements of different color response characteristics located in said two successive rows with two of the three photoelements being in seaid one of the two successive rows and the other one photoelement being in said other of the two successive rows, two of the three photoelements in the second set of photoelements being the same as two of the three photoelements in the first set.

15. The method of Claim 14 characterized in that the three different color responses are white (W), yellow (Ye) and cyan (Cy), and the luminance (L) and chrominance (RGB) information is produced according the following equations:

$$L = Cy + Ye + 0.66 \text{ aW} \quad ;$$
$$R - W - Cy \quad ;$$
$$G = Cy + Ye - W \quad ;$$
$$B = W - Ye \quad ;$$

where R is red, G is green, B is blue and a is adjustable quantity near unity.

0133835

FIG.1    PRIOR ART

FIG.2    PRIOR ART

FIG.3    PRIOR ART

2/4

|   | 1 | 2 | 3 | 4 | 5 | 6 | 7 | ……… | m-1 | m |
|---|---|---|---|---|---|---|---|---|---|---|
| 1 | Cy | Ye | W | Cy | Ye | W | Cy | | Cy | Ye |
| 2 | W | Cy | Ye | W | Cy | Ye | | | W | Cy |
| 3 | Cy | Ye | W | Cy | Ye | W | Cy | | Cy | Ye |
| 4 | W | Cy | Ye | W | Cy | Ye | | | Ye | W | Cy |
| 5 | Cy | Ye | W | Cy | Ye | W | Cy | | Cy | Ye |
| 6 | W | Cy | Ye | W. | Cy | Ye | | | Ye | W | Cy |
| n-1 | Cy | Ye | W | Cy | Ye | W | Cy | | Cy | Ye |
| n | W | Cy | Ye | W | Cy | Ye | | | Ye | W | Cy |

*FIG. 4*

*FIG. 5*

PE

20  20  20
22  20  20  20  22

*FIG. 6*

24  28  26

28

20

20

22                    22

**FIG.7**

**FIG.8A**

40        40        40        40

28

40        40        40        40

40        40        40

**FIG.8B**

42

40        40        40

40        40        40        40

40        40        40

## FIG.9